# EUROPÄISCHE PATENTSCHRIFT

(11) **EP 1 295 531 B1**
(45) Veröffentlichungstag und Bekanntmachung des Hinweises auf die Patenterteilung: **24.05.2006**
(21) Anmeldenummer: 02020930.0
(22) Anmeldetag: 19.09.2002
(51) Int. Cl.: A23G 3/02, A23G 1/22, A23G 3/20, A23G 1/20, A23G 1/21, A23P 1/00, A23G 1/00, A23G 3/00

(54) **Verfahren und Vorrichtung zum Formen einer Schale aus fett- und/oder zuckerhaltiger Masse in einer Form**
Process and apparatus for shaping a shell of fat and/or candy mass in a mould
Procédé et appareil de moulage d'une coque de matière grasse et/ou d' une masse de sucre dans un moule

(30) Priorität: 25.09.2001 DE 10147177
(43) Veröffentlichungstag der Anmeldung: 26.03.2003
(73) Patentinhaber: Sollich KG, 32105 Bad Salzuflen (DE)
(72) Erfinder: Klahn, Uwe, 32105 Bad Salzuflen (DE)
(74) Vertreter: Rehberg Hüppe + Partner

(56) Entgegenhaltungen:
- EP-A- 0 318 595
- EP-A- 0 566 927
- EP-A- 0 581 243
- EP-A- 0 680 701
- DE-A- 1 955 056
- GB-A- 958 298
- US-B1- 6 242 028

## Beschreibung

Die Erfindung betrifft ein Verfahren zum Herstellen einer verzehrbaren Schale aus fett- und/oder zuckerhaltiger Masse in einer Form. Dabei wird die Form mit der Masse in fließfähigem Zustand zu einem solchen Teil gefüllt, wie es der Menge der Masse zur Herstellung der Schale entspricht. Die Masse wird entlang der Wandung der Form verdrängt. Sie verfestigt sich zu der Schale. Schließlich wird die verfestigte Schale aus der Form ausgebracht, eventuell mit einer weiteren Masse gefüllt, gedeckelt, überzogen oder sonst wie weiterverarbeitet und endlich verpackt. Die Erfindung zeigt auch eine Vorrichtung zum Herstellen einer solchen Schale. Der in dieser Anmeldung verwendete Begriff "fließfähige Masse" ist weit zu verstehen. Es handelt sich um alle halbflüssigen, flüssigen, teigigen oder breiigen Massen, die meist unter Einwirkung von Wärme nach Art einer Flüssigkeit oder eines Honigs in eine Form portionsweise eingebracht werden können und sich in der Form - meist durch Abkühlung - zu einem festen schalenartigen Hohlkörper verformen bzw. zu einer solchen festen Schale erstarren oder sich verfestigen. Zu solchen Massen gehören Schokolademassen, Karamellmassen, Fondantmassen, Fruchtmassen, Gelees, Nougatmassen. Aber auch zuckerhaltige Massen, wie beispielsweise Bonbonmassen können zur Herstellung solcher Schalen eingesetzt werden. Die dabei entstehende feste Schale ist meist nur als Teilprodukt anzusehen. Sie wird in der Regel mit einem oder mehreren weiteren Massen gefüllt, gedeckelt oder sonst wie zu dem verzehrbaren Produkt der Süßwarenindustrie weiterverarbeitet.

Ein Verfahren und eine Vorrichtung der eingangs beschriebenen Art sind aus der GB 958 298 bekannt. Die Vorrichtung dient zunächst zum Herstellen einer Schale aus Süßwarenmasse, die durch weitere Massen, eine Nuss, eine Frucht oder dergleichen zu einem Vollkörper ergänzt wird. Es findet eine zumindest bereichsweise aus elastischem, rückstellfähigem Material bestehende Form Anwendung. Die Form ist zum Einbringen der Masse in fließfähigem Zustand oben offen ausgebildet. Auf der der Masse abgekehrten Seite der Form ist kontaktlos zu der eingebrachten Masse ein unterhalb der Form angeordneter und vertikal relativ zu der Form in einem Vorhub und einem Rückhub bewegbarer Verdränger zum temporären elastischen Verformen der Form mit der darin befindlichen fließfähigen Masse vorgesehen. Der Hub des Verdrängers ist so bemessen, dass in der sich in der Form verfestigenden ersten Masse eine Vertiefung geschaffen wird, die z. B. zur Aufnahme einer Nuss oder einer Frucht ausreicht. Dabei schließt sich an den relativ klein bemessenen Vorhub eine Haltezeit an, während der sich die Masse in einem äußeren Randbereich verfestigt, während sie innen flüssig bleibt. Auf diese Weise entsteht die zur Aufnahme der Nuss oder Frucht bemessene Vertiefung in der Masse. Die so gebildete Schale weist erhebliche Wanddickenunterschiede auf.

Eine weitere Vorrichtung zur Herstellung einer Schale aus Schokolade oder einer ähnlichen Masse ist aus der GB 207 974 bekannt. Dabei wird die Masse in fließfähigem Zustand in die oben offene Form eingefüllt. Die Form besteht aus einem festen, nicht verformbaren Körper, insbesondere Metall. Die Form wird teilgefüllt mit einer solchen Menge an Masse, wie sie für die Herstellung der Schale festgelegt ist. In die von oben offene Form wird ein Verdränger so auf die noch flüssige Masse abgesenkt, dass die Masse den Zwischenraum zwischen dem Verdränger und der nach oben offenen Form bis zum Rand ausfüllt. Der Verdränger ist dabei als Stempel ausgebildet und an einen Kühlkreislauf angeschlossen, um auf diese Art und Weise die Masse abzukühlen und zur Verfestigung zu bringen. Problematisch ist dabei, dass die Masse in fließfähigem Zustand bis hin zur Erstarrung der Schale mit dem von oben einwirkenden Verdränger direkt in Kontakt kommt. Um die verfestigte Schale überhaupt von dem stempelartigen Verdränger lösen zu können, wird der stempelartige Verdränger mit einem Schmiermittel versehen, welches eine Flüssigkeit oder eine Lösung sein kann. Alkohle, Terpene, essbare Paraffine aber auch Wasser und Gelatine sind als solche Trennmittel genannt. Diese Trennmittel werden im Bereich des Stempels angewendet. Die Form wird nicht gekühlt und offensichtlich auch nicht mit einem Trennmittel behandelt.

Die EP 0 589 820 A1 zeigt ein Verfahren zur Herstellung von schalenartigen Hohlkörpern aus Schokolade oder einer anderen fetthaltigen Masse. Auch hier wird die Masse in fließfähigem Zustand in eine feste Form gegossen. Die Form besteht vorzugsweise aus hartem Polycarbonat. Auch hier wird ein auf- und abbeweglicher Stempel, der an einen Kühlkreislauf angeschlossen ist, in die flüssige in der Form befindliche Masse abgesenkt. Der Stempel hat dabei eine niedrigere Temperatur als 0° und verbleibt in der durch ihn verdrängten Masse für eine gewisse Zeit, meist zwischen einer und zehn Sekunden. Die Temperatur der Form soll geringer sein als die Temperatur der Masse. Schokolademassen und andere fetthaltige Massen, die beim Erstarren kontrahieren, lassen sich bekanntermaßen relativ leicht aus einer Form entfernen. Dies geschieht durch Wenden der Form und durch Ausschlagen. Mit diesem Verfahren lassen sich Schalen mit sehr gleichmäßiger Wandstärke herstellen. Die Schalen sollen sich auch von dem stark gekühlten Stempel leicht lösen.

Die DE 198 52 262 C2 zeigt und beschreibt eine Stempeleinrichtung zum Prägen von Schalen mit offenen Hohlformen, die mit flüssiger Schokolademasse gefüllt werden. Auch hier wird der Stempel von oben unter direktem Kontakt in die flüssige Schokolademasse abgesenkt. Der Stempel ist gekühlt. Er weist einen Kupferkern und eine Aluminiumhülle auf, um die Ableitung der Wärme zu begünstigen.

Aus der CA 2,063,042 ist es bekannt, flüssige Schokolademasse in eine elastische membranartige Form zu gießen und dort erstarren zu lassen. Damit können Körper aus Schokolade erstellt werden, die Hinterschneidungen aufweisen. Zum Entformen wird die elastische Form unter Einwirkung von Vakuum aufgeweitet, so dass der verfestigte Körper aus Schokolade aus der Form herausfällt. Es ist auch möglich, stempelartige Auswerfer zu benutzen und die elastische Form beim Auswerfen des verfestigten Schokoladeteils so auszustülpen, dass der verfestigte Schokoladekörper freigegeben wird. In diesem Zusammenhang ist also die Verwendung elastischer Formen bekannt. Schalenartige Hohlkörper können auf diese Weise jedoch nicht hergestellt werden.

Der Erfindung liegt die Aufgabe zugrunde, ein Verfahren und eine Vorrichtung zum Herstellen auch empfindlicher schalenartiger Hohlkörper aus fett- und/oder zuckerhaltiger Masse bereitzustellen, die eine möglichst gleichmäßige Wandstärke in der sich verfestigenden Schale aufweisen und sich die verfestigte Schale auch bei schwierig zu handhabenden Massen aus der Form ausbringen lässt.

Erfindungsgemäß wird dies bei dem Verfahren der eingangs beschriebenen Art dadurch erreicht, dass die Form in ihrem Bereich aus elastischem, rückstellfähigem Material durch den Verdrängers in einem aufwärts gerichteten Vorhub so hochgestülpt wird bis sich der Boden der Form oberhalb des Randes der Form befindet und die Masse in fließfähigem Zustand den vorgesehenen Randbereich der Schale erreicht.

Die Erfindung geht von dem Gedanken aus, das Verdrängen der in die Form eingefüllten Masse von unten gezielt durchzuführen. Dabei wird eine Form eingesetzt, die einerseits nach oben offen ist, damit die Masse in fließfähigem Zustand in diese Form eingegossen werden kann. Die Form selbst besteht zumindest bereichsweise aus elastischem Material. Die Form ist beispielsweise relativ dünnwandig und membranartig ausgebildet. Sie lässt sich durch einen von unten nach oben bewegten Verdränger verformen. Der Verdränger wird dabei auf der der Masse abgekehrten Seite der Form angesetzt und zur Einwirkung gebracht, so dass die noch flüssige Masse bis zu dem zu bildenden Rand der Schale in der Form angehoben wird. Die Form wird teilweise und somit bereichsweise nach oben durchgestülpt, freilich so, dass die Masse die Form nicht verlässt. Durch zeitlich gesteuertes gezieltes Absenken des Verdrängers unter gleichzeitiger Erstarrung der Masse entlang der Wandung der Form entsteht die Schale. Das Material der Form muss auch eine gewisse Rückstellfähigkeit aufweisen, damit sie beim Rückhub des Verdrängers ihre ursprüngliche Ausgangsform wieder einnimmt und den noch flüssigen Teil der Masse in den Bodenbereich der Form gelangen lässt, so dass dieser sich dann dort verfestigt. Die Form kann insbesondere aus Silikon bestehen oder zumindest Bereiche aus Silikon aufweisen. Die Form besitzt napfartige, insbesondere halbkugelförmige, Gestalt. Sie kann eine Wandstärke von ein bis zwei Millimeter aufweisen. Die Form kann aber auch mehr kegelstumpfförmige Gestalt besitzen oder sogar einen quadratischen oder rechteckigen Querschnitt, zweckmäßig mit abgerundeten Ecken. Als Verdränger können alle Elemente eingesetzt werden, mit denen sich die elastische Form nach oben verformen lässt. Der Verdränger kann in der einfachsten Ausführungsform mechanisch als Stempel mit oben abgerundeter Oberfläche ausgebildet sein. Wichtig ist in diesem Zusammenhang die temperaturmäßige Abstimmung. Die Masse muss in fließfähigem Zustand mit entsprechender Temperatur in die Form eingefüllt werden. Dabei ist es bedeutsam, dass sich die Masse zunächst gleichmäßig in der Form verteilt und einen horizontal ausgerichteten Spiegel annimmt. Der Verdränger wird zentriert zur Achse der Form in einem Vorhub von unten nach oben bewegt, wobei die noch fließfähig Masse in der Form weiterverteilt und so angehoben wird, dass sie den vorgesehenen Randbereich in der Form erreicht. An dieser Stelle beginnt die Verfestigung der Masse, welche durch eine zusätzliche Kühlung der Formen noch beschleunigt werden kann. Dieser Zustand kann mit einer Haltedauer von auch mehreren Sekunden aufrechterhalten bleiben, bis die Verfestigung im Randbereich der Schale eintritt. Der Verdränger wird dann zeitlich gezielt in seinem Rückhub nach unten bewegt, wobei dies abgestimmt auf die Art und die Verfestigungseigenschaften der Masse geschieht. Es bildet sich zunehmend beginnend vom Randbereich nach unten die verfestigte Schale. Schließlich nimmt die Form aufgrund ihrer Rückstellung wieder die Ausgangsgestalt ein. Danach verfestigt sich die Schale auch im Bodenbereich. Ziel dieses Rückhubes ist es, eine möglichst gleichmäßige Wandstärke in der sich verfestigenden Schale zu erreichen. Es ist aber auch möglich, eine gewisse Masseanhäufung im Bodenbereich zuzulassen.

Das neue Verfahren behält den im Stand der Technik bereits erreichten Vorteil bei, dass nur die Form mit der Masse in Kontakt kommt. Die Probleme des Anhaftens und Lösens der Masse von einem Verdränger treten nicht auf, da die Masse - abgesehen von ihrem Kontakt mit der Form - kontaktlos verformt wird. Das neue Verfahren lässt einen sehr großen Füllungsgrad zu, d. h. es können relativ dünnwandige Schalen entsprechenden Volumens geformt werden. Es ist ein Füllungsgrad bis 60 % erreichbar, so dass in einer solchen Schale eine erhebliche Menge an anderer Masse oder Massen untergebracht werden können. Es ist sinnvoll, die Form auf irgendeine Weise zu kühlen, um die Verfestigung der Masse zu beschleunigen oder zu steuern. Eine Kühlung des Verdrängers ist nicht erforderlich. Auch entfallen jegliche Probleme, die mit der besonderen Ausbildung von Verdrängerstempeln, die von oben in die Masse eingreifen, im Stand der Technik verbunden sind. Bei dem neuen Verfahren bleibt der Verdränger immer sauber, da er mit der Masse nicht in Kontakt kommt. Die Wandstärke der Schale kann durch die Menge der in die Form eingebrachten Masse und durch die Verweilzeit des Stempels in der eingefahrenen Position gesteuert werden. Auf diese Weise ist es möglich, mit der gleichen Form auch Schalen unterschiedlicher Wandstärke herzustellen. Das neue Verfahren ermöglicht auch kurze Prozesszeiten, d. h. bei entsprechender Einhaltung der Temperaturen lässt sich in kurzer Zeit eine erhebliche Anzahl von Schalen herstellen. Der Einsatz einer Form aus elastischem rückstellfähigem Material, wie z. B. Silikon, erbringt zugleich den weiteren Vorteil, dass das Ausbringen der verfestigten Schalen aus der Form in einfacher Weise möglich ist. Das Ausbringen kann nach oben oder auch nach dem Wenden der Form nach unten erfolgen. Auch dabei kann ein Stülpvorgang, der zumindest teilweise durchgeführt wird, unterstützend eingesetzt werden. Die Form aus elastisch verformbarem rückstellfähigem Material erfüllt also eine Doppelfunktion, einmal bei der Formgebung der Schale und zum anderen beim Ausbringen der verfestigten Schale aus der Form.

Besonders sinnvoll ist es, wenn der Rückhub des Verdrängers in Abstimmung auf die fortschreitende Verfestigung der Masse steuerbar ist. Der Verdränger hat an sich nur die Aufgabe, die Form bereichsweise bzw. teilweise nach oben hochzustülpen oder durchzustülpen. Diese gezielte Bewegung wird dann beendet, wenn die Masse in fließfähigem Zustand den vorgesehenen Randbereich der Schale erreicht hat und sich dort verfestigt. Der Randbereich der zu bildenden Schale muss nicht unbedingt mit dem Randbereich der Form übereinstimmen. Da die Form, meist in vielfacher Anordnung von Vertiefungen innerhalb eines plattenartigen Gegenstandes in eine horizontal ausgebildete Platte übergeht, braucht bzw. soll nur die die Vertiefung darstellende Form elastisch verformbar sein. Der plattenartige Gegenstand kann im Gegenteil dazu als fester widerstandsfähiger Körper ausgebildet sein.

Der Rückhub des Verdrängers leitet die Rückstellung der Form in ihre Ausgangsgestalt ein. Dies wird so durchgeführt, dass die kontaktlose Verdrängung der fließfähigen Masse unter Rückstellung der Form in Abstimmung auf die sich verfestigenden Bereiche der Schale rückgängig gemacht wird.

Von besonderer Bedeutung für das neue Stülpverfahren kann es sein, wenn auf der der Masse zugekehrten Seite der Form ein kaltes Gas, insbesondere Kaltluft, eingeblasen wird. Das Einblasen des kalten Gases dient der Kühlung der Masse und der örtlichen Verfestigung der Masse. Das Einblasen kann taktweise zu einem bestimmten Verfahrensabschnitt geschehen oder auch während der gesamten Formgebung. Es dient auch dazu, eine Masseanhäufung im Bodenbereich der Form zu minimieren.

Eine zur Durchführung des beschriebenen Verfahrens geeignete Vorrichtung der eingangs beschriebenen Art kennzeichnet sich erfindungsgemäß dadurch, dass der aufwärts gerichtete Vorhub des Verdrängers so bemessen ist, bis sich im oberen Totpunkt der Boden der Form oberhalb des Randes der Form befindet und die Masse in fließfähigem Zustand den vorgesehenen Randbereich der Schale erreicht.

Von besonderer Bedeutung ist die Form. Die Form stellt eine napfartige Vertiefung dar. Sie besteht aus elastischem Material mit hinreichender Rückstellfähigkeit. Auch muss die Wandstärke der Form zumindest bereichsweise so gestaltet sein, dass sie sich zur Formgebung der Schale teilweise durchdrücken bzw. teilweise umstülpen lässt. Die Form wird immer nur teilweise mit Masse gefüllt, die sich zunächst in der Form horizontal verteilt. Diese Verteilung kann durch einen Vibrations- bzw. Rüttelprozess begünstigt oder beschleunigt werden, insbesondere dann, wenn teig- oder honigartig fließende Massen zu der Schale verarbeitet werden. Ein besonders geeignetes Material für die Form ist Silikon. Aber auch andere elastische Kunststoffe können eingesetzt werden. Mit dieser Form arbeitet ein Verdränger zusammen, der auf der der Masse abgekehrten Seite unter der Form vorgesehen ist bzw. während des Stülpvorganges auf die Form einwirkt. Der Verdränger kommt mit der Masse zu keinem Zeitpunkt in Berührung. Er kann in verschiedener Weise ausgebildet werden. Beispielsweise als mechanisch angetriebener Stempel, als ein aufblasbares Kissen, als Kolbenstange einer Kolben/Zylinder-Einheit oder auch als elektromotorisch bewegbare Zahnstange. Wichtig ist, dass der Verdränger unterhalb der Form angeordnet und vertikal relativ zu der Form bewegbar ist. Der Verdränger wirkt also von unten nach oben auf die Form ein und verformt gleichzeitig die Form sowie die darin befindliche Masse.

In einer besonders einfachen und vorteilhaften Ausführungsform kann der Verdränger als mechanischer Stempel ausgebildet sein, der in einem aufwärts gerichteten Vorhub den elastischen Bereich der Form noch oben durchstülpt und in einem abwärts gerichteten Rückhub die Ausgangsgestalt der elastischen Form durch Rückstellung gezielt zulässt. Es ist möglich, die Form und/oder den Verdränger bzw. Stempel zu kühlen. Wenn der Verdränger als mechanischer Stempel ausgebildet ist, kann dieser Stempel auch an einen Kühlkreislauf angeschlossen werden. Im Allgemeinen reicht es jedoch, wenn z. B. die Form mit kalter Luft von unten angeblasen wird.

Es ist ein Antrieb für die Bewegung des Verdrängers vorgesehen, der abgestimmt auf die fortschreitende Verfestigung der Masse zu der Schale gesteuert wird. Diesem Antrieb ist eine Steuereinrichtung zugeordnet, die den Ablauf des nach oben gerichteten Vorhubes und des nach unten gerichteten Rückhubes des Verdrängers bestimmt bzw. festlegt. Die Hubbewegung muss durchaus nicht gleichförmig geschehen. Sie kann in verschiedenen Abschnitten mit verschiedenen Geschwindigkeiten durchgeführt werden, um auf das Erstarrungsverhalten der Masse in der Form Rücksicht zu nehmen. Es ist auch sinnvoll, wenn der Verdränger am oberen Totpunktseiner Bewegung für eine gewisse Haltezeit in Ruhe bleibt bis das Erstarren der Masse im Randbereich der Form einsetzt. Diese Haltezeit kann zwischen ein bis dreißig Sekunden liegen.

Zwecks Minimierung einer Anhäufung der Masse im Bodenbereich der Schale kann oberhalb der Form eine Einrichtung zum Einblasen eines kalten Gases während und/oder nach dem Rückstellen der Form in ihre Ausgangsgestalt vorgesehen sein. Als Gas kommt kalte Luft, Stickstoff oder dgl. in Frage. Dieses kalte Gas dient nicht nur der Kühlung der Masse. Bei besonders fließfähigen Massen kann dieses Gas auch zur kontaktlosen Formgebung benutzt werden, insbesondere im Bodenbereich der Form bzw. Schale. Sinnvoll ist es, wenn zumindest der elastisch verformbare Bereich der Form dünnwandig ausgebildet ist, und die Form durch einen ringförmigen Stützkörper auf der der Masse abgekehrten Seite abgestützt ist. Dieser Stützkörper unterstützt die dünne Wandung der elastisch verformbaren Form bereichsweise. Er lässt es zu, die Form besonders dünnwandig auszubilden, gleichsam als einen membranartigen Einsatz innerhalb einer Form, die ansonsten aus nicht-verformbarem festem Material, beispielsweise Metall besteht. Für das Durchstülpverfahren kommt es nur darauf an, dass dieser Einsatz verformbar ist, damit mit Hilfe des Verdrängers eine kontaktlose Verlagerung der noch fließfähigen Masse in der Form bzw. im Einsatz möglich wird. Der in der Regel aus Metall bestehende Stützkörper ist zentral durchbrochen. Er kann hier eine Zentrierfunktion für einen stempelartig ausgebildeten Verdränger bilden, so dass sichergestellt ist, dass der Verdränger in der vertikalen Achse der Form angreift und so die Masse nach allen Seiten gleichmäßig verdrängt. Zugleich stellt dieser Stützkörper eine einfache Möglichkeit für die Kühlung der Form dar. Der Stützkörper kann entsprechend hohl ausgebildet und an einen Kühlkreislauf angeschlossen sein.

Die Erfindung wird anhand verschiedener Ausführungsbeispiele weiter erläutert und beschrieben. Es zeigen:
- Fig. 1: eine schematische Darstellung einer einzelnen Form im Querschnitt nach dem Einbringen der fließfähigen Masse,
- Fig. 2: die Form gemäß Fig. 1 nach dem Anheben des Verdrängers,
- Fig. 3: die Relativlage der Teile nach dem teilweisen Absenken des Verdrängers,
- Fig. 4: eine Darstellung während der Verfestigung der Masse im Bodenbereich,
- Fig. 5: die in der Form befindliche und zu einer Schale erstarrte Masse,
- Fig. 6: die Form mit der Schale und einer zusätzlichen weiteren eingebrachten Masse,
- Fig. 7: einen Querschnitt durch die Form nach einem Deckelvorgang,
- Fig. 8: eine Querschnittsdarstellung unmittelbar vor der Herausnahme des Produkts aus der Form,
- Fig. 9: eine schematische Darstellung des Produkts vor dem Einlegen in einen Verpackungsspiegel,
- Fig. 10: eine ähnliche Darstellung wie Fig. 1, jedoch bei einer abgewandelten Form,
- Fig. 11: eine ähnliche Darstellung wie Fig. 2, jedoch mit einer abgewandelten Form und einem an einen Kühlkreislauf angeschlossenen Verdränger,
- Fig. 12: eine schematische Darstellung einer weiteren Ausführungsform eines Verdrängers,
- Fig. 13: eine schematische Darstellung während des Ausbringens des fertigen Produktes aus der Form.

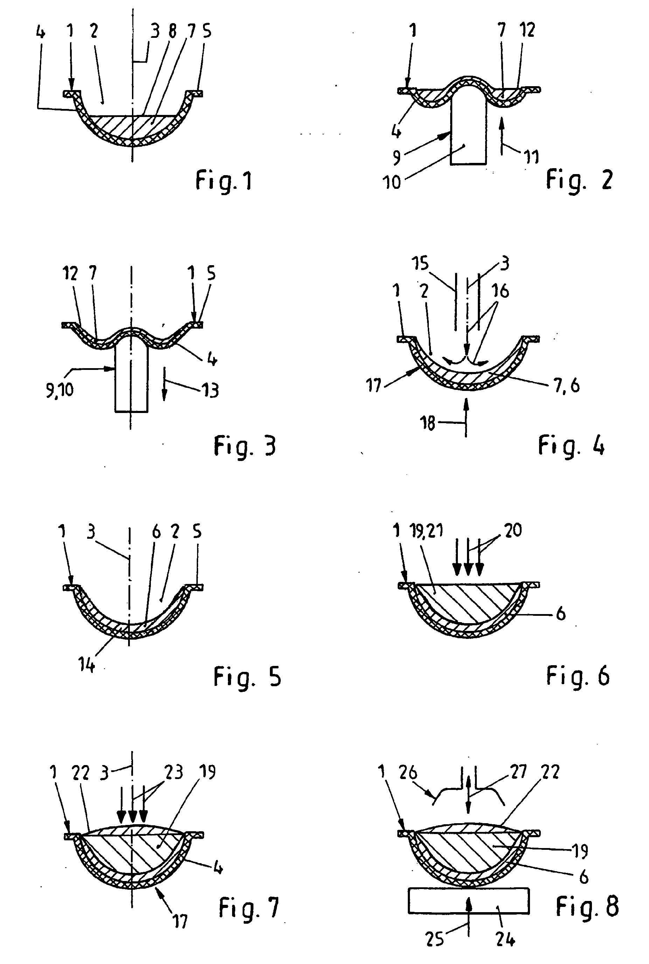

Die Fig. 1 bis 13 sind schematisiert dargestellt. Es ist nur die Querschnittsdarstellung dargestellt, um die Übersichtlichkeit zu erhöhen. Weiterhin ist nur eine einzelne Form dargestellt. Es versteht sich, dass normalerweise Formplatten eingesetzt werden, die eine Vielzahl solcher einzelner Formen rastermäßig bzw. feldmäßig nebeneinander angeordnet aufweisen.

Fig. 1 zeigt eine Form 1. Die Form 1 weist eine napfartige Vertiefung 2 auf, die oben offen ausgebildet ist. Die Form 1 mit ihrer Vertiefung 2 kann rotationssymmetrisch zu einer vertikalen Achse 3 ausgebildet sein. Die Form 1 ist als Einzelform dargestellt, obwohl sie in der Regel in vielfacher Anordnung feldmäßig nebeneinander vorgesehen ist, um mehrere Schalen bzw. schalenartige Formkörper herstellen zu können. Die Form 1 besteht beispielsweise aus elastischem Kunststoff, zumindest im Bereich ihrer napfartigen Vertiefung 2. Diese napfartige Wandung 4 kann an eine mehr oder weniger als fester Körper ausgebildete Platte 5, die nur teilweise dargestellt ist, angeschlossen sein.

Zur Herstellung einer Schale 6 (Fig. 5) wird eine fließfähige Masse 7 (Fig. 1) in die Form 1 von oben eingegossen. Die fließfähige Masse 7 füllt die Vertiefung 2 der Form 1 nur teilweise aus. Sie ist in ihrer Menge auf die Größe und Wandstärke der zu bildenden Schale 6 abgestimmt. Als Massen 7 können Karamellmassen, Fondantmassen, Fruchtmassen, Gelees, aber auch Schokolademassen und Bonbonmassen, also Hartzuckermassen, eingesetzt werden, im Übrigen alle halbflüssigen, teigigen oder honigartig fließenden Massen. Die Masse 7 gelangt in fließfähigem Zustand in die Vertiefung 2 der Form 1 und verbleibt zunächst so lange bis sich die Masse 7 unter Ausbildung eines horizontalen Massespiegels 8 in der Form 1 verteilt hat. Die Verteilung kann durch Vibrations- oder Rüttelmaßnahmen verstärkt oder beschleunigt werden. Im Allgemeinen ist dies jedoch nicht erforderlich. Wichtig ist die Temperatur der Masse 7. Die Masse 7 muss je nach ihrer Art mit einer festgelegten, oberhalb der Erstarrungstemperatur liegenden Temperatur in die Vertiefung 2 der Form 1 eingebracht werden.

Wie aus Fig. 2 erkennbar ist, ist unterhalb der Form 1, also auf der der Masse 7 abgekehrten Seite der Form ein Verdränger 9 angeordnet. Der Verdränger 9 kann in seiner einfachsten Form als mechanischer Stempel 10 ausgebildet sein. Der Verdränger 9 besitzt einen im Vergleich zu dem Radius der Vertiefung erheblich kleineren Radius. Er kann in seinem oberen Bereich, wie dargestellt, abgerundet ausgebildet sein. Er kann aber auch umgekehrt in diesem oberen Bereich eine Vertiefung besitzen. Der Verdränger 9 ist in seiner Ausgangsposition unterhalb der Form 1 angeordnet, und zwar so, dass die Form ihre Ausgangsgestalt (Fig. 1) unbeeinflusst einnehmen kann. Hierzu besitzt das Material, aus welchem die Form 1 zumindest bereichsweise besteht, ein entsprechendes Rückstellvermögen.

Zeitlich und wegmäßig gesteuert wird nun der Verdränger 9 in Richtung eines Pfeils 11 relativ zur Form 1 angehoben, so dass er gleichzeitig die Form 1 sowie die darin befindliche Masse 7 verformt bzw. verlagert. Der Aufwärtshub des Verdrängers 9 gemäß Pfeil 11 wird im oberen Totpunkt beendet. Es kann hier eine Haltezeit zur Einwirkung gebracht werden, die ausreicht, damit die noch flüssige Masse 7 im Bereich eines zu bildenden Randes 12 an der Schale 6 erstarrt bzw. sich an der Wandung 4 der Form 1 verfestigt. Die übrige Masse 7 verbleibt dabei noch in flüssigem Zustand.

Abgestimmt auf die Erstarrung der flüssigen Masse 7, die bereichsweise von oben nach unten verläuft, wird nachfolgend der Verdränger 9 gemäß Fig. 3 in Richtung eines Pfeils 13 nach unten abgesenkt, wobei von oben nach unten, nachfolgend zu dem gebildeten Rand weitere Bereiche der zu bildenden Schale 6 aus der Masse 7 erstarren. Der Absenkvorgang des Verdrängers 9 gemäß Pfeil 13 kann kontinuierlich oder schrittweise, auch mit wechselnden Geschwindigkeiten, abgestimmt auf die Art die Eigenschaften der Masse 7 sowie auf die Gestalt der Form 1 erfolgen. Dabei wird schließlich ein Zustand erreicht, wie er in Fig. 5 dargestellt ist. Sämtliche Masse 7 ist zu der Schale 6 erstarrt. Die Form 1 hat sich in Folge des Rückstellvermögens und unter gleichzeitiger Entfernung des Verdrängers 9 in ihre Ausgangsposition, wie in Fig. 1 dargestellt, zurückgebildet. Es versteht sich, dass der Verdränger 9 sowohl während seiner Aufwärtsbewegung gemäß Pfeil 11 (Fig. 2), als auch während seiner Abwärtsbewegung gemäß Pfeil 13 (Fig. 3) zentrisch zur Achse 3 bewegt wird.

Insbesondere bei der halbkugelförmigen, napfartigen Gestaltung der Schale 6, die eine entsprechend gestaltete Form 1 mit Ihrer Vertiefung 2 voraussetzt, wird sich je nach der eingesetzten Masse, eine gewisse Anhäufung des Massematerials im Bereich des Bodens der Form 1 bzw. der Vertiefung 2 einstellen. Im Bereich des Bodens 14 wird die Schale 6 in der Regel eine größere Wandstärke aufweisen als im Bereich des Randes 12. Um dieser Masseanhäufung im Bereich des Bodens 14 entgegenzuwirken und eine gleichmäßigere Wandstärke der Schale 6 zu verwirklichen, kann der Form 1 eine Einrichtung 15 zum Einblasen eines kalten Gases vorgesehen sein, welches sich in der Vertiefung 2 der Form 1 gemäß den Pfeilen 16 verteilt. Als kaltes Gas kann kalte Luft oder aber auch jedes andere inerte Gas, beispielsweise Stickstoff in gasförmiger Form eingesetzt werden. Dieses zusätzliche Einblasen von kaltem Gas kann taktweise gezielt kurzzeitig angewendet werden, etwa unmittelbar nach dem Erreichen der Ausgangsgestalt der Form 1 nach ihrer Rückstellung. Zu diesem Zeitpunkt sind noch Massebereiche am Boden 14 flüssig oder teilweise flüssig. Diese können durch den nach unten ausgeblasenen Gasstrom sowohl gekühlt als auch innerhalb der Form verlagert werden, so dass die Masseanhäufung im Bereich des Bodens 14 minimiert wird. Es ergibt sich über die Höhe der Schale 6 eine gleichmäßigere Wandstärke. Diese zusätzliche Kühlung und Verlagerung der Masse 7 ist jedoch nur bei manchen Massen erforderlich. Alternativ oder zusätzlich ist es auch möglich, die Form 1 zu kühlen, beispielsweise durch einen von unten her einwirkenden Kühlgasstrom, wie er in Fig. 1 durch die Pfeile 17 und 18 angedeutet ist. Die Form 1 kann aber auch in anderer Weise gekühlt werden, um das erstarren der Masse 7 zu der Schale 6 zu begünstigen oder zu steuern.

Nachdem die Schale 6 gemäß Fig. 5 vollständig erstarrt ist, was auch dadurch erreicht werden kann, dass die Form 1 mit der darin befindlichen Schale 6 durch einen Abschnitt eines Kühlkanals geführt wird, kann eine zweite Masse 19, z. B. eine Nougatmasse, gemäß Pfeil 20 in den Hohlraum 21 der Schale 6 eingegossen werden, wie dies in Fig. 6 dargestellt ist.

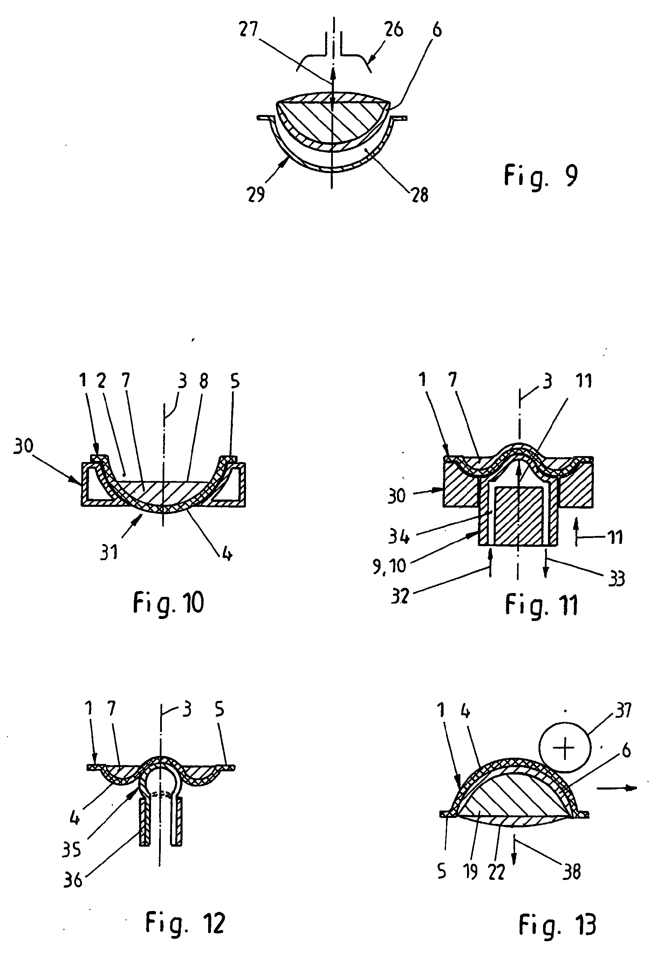

Fig. 7 zeigt einen weiteren möglichen Schritt bei der Herstellung eines verzehrfähigen Produktes, nämlich die Aufbringung eines Deckels 22. Eine entsprechende Deckelmasse wird auch hier gemäß den Pfeilen 23 aufgegossen. Während dieser weiteren Herstellungsschritte eines fertigen Produktes kann ein Kühlluftstrom gemäß Pfeil 17 (Fig. 7) von unten auf die Form 1 gerichtet sein. Es ist auch möglich, nach dem Aufgießen der Deckelmasse von oben mit kaltem Gas zu kühlen, wie dies anhand von Fig. 4 bezüglich der Masse 7, die die Schale 6 bildet, verdeutlicht wurde. Schließlich werden die Massen 7 und 19 sowie der Deckel 22 völlig verfestigt sein, so dass das Produkt aus der Form 1 herausgenommen werden kann. Fig. 8 zeigt einen Auswerfer 24, der als fester Körper ausgebildet sein kann. Der Auswerfer 24 wird gemäß Pfeil 25 gesteuert nach oben bewegt. Auch dabei spielt das elastische Material der Form bei einer günstigen Entformung, d. h. Herausnahme der Schale 6 aus der Form 1 eine entsprechende Rolle. Das hergestellte Produkt löst sich auch bei schwierig zu verarbeitenden Massen 7, insbesondere bei Zuckermassen, aus der Form 1. Es versteht sich, dass auf die gleiche Weise wie in Fig. 8 dargestellt, auch nicht gefüllt also leere Schalen 6 aus der Form 1 herausgenommen werden können. Es ist möglich, oberhalb der Form 1 einen Sauger 26 anzuordnen, der gemäß Doppelpfeil 27 bewegt wird und das Produkt oder die Schale 6 übernimmt. Anschließend kann, wie dies anhand von Fig. 9 angedeutet ist, die Absenkung des Produktes mit Hilfe des Saugers 26 in eine Vertiefung 28 eines Verpackungsspiegels 29 erfolgen. Es versteht sich, dass der Sauger 26 an eine Unterdruckquelle angeschlossen ist und entsprechend gesteuert wird.

Fig. 10 verdeutlicht eine weitere mögliche Ausführungsform der Form 1. Hierzu kann zunächst auf die vorangehende Beschreibung verwiesen werden. Die Form 1 weist gemäß Fig. 10 jedoch als einen weiteren Bestandteil einen Stützring 30 auf. Der Stützring 30 kann aus gut wärmeleitfähigem Material bestehen und an einen Temperierkreislauf angeschlossen sein, um die Form 1 in ihren Kontaktbereichen zu dem Stützring 30 temperaturmäßig zu beeinflussen. Es muss sich hier nicht unbedingt um einen Kühlkreislauf handeln. Es ist auch möglich, die Wandung 4 der Form 1 gezielt und nach Zeitperioden getrennt zu temperieren, um eine genaue Steuerung der Erstarrung der Masse 7 zu der Schale 6 zu bewirken. Der Stützring 30 ist in aller Regel als ringförmiger Körper ausgebildet. Er besitzt zentriert zu der Achse 3 eine Durchbrechung 31, die wiederum als Zentrierführung für den Verdränger 9 bzw. Stempel 10 genutzt werden kann, wie dies aus Fig. 11 hervorgeht. Es ist auch möglich, den Stützring 30 als geschlossenen Körper auszubilden und beweglich anzuordnen, so dass er auf die Wandung 4 der Form 1 nur zu solchen Zeiten einwirkt, in denen der Verdränger 9 mit der Wandung 4 nicht in Kontakt kommt.

Fig. 11 verdeutlicht eine weitere Ausführungsmöglichkeit. Hier ist der Verdränger 9 bzw. Stempel 10 gekühlt. Er ist an einen durch Pfeile 32/33 angedeuteten Kühlkreislauf angeschlossen. Zu diesem Zweck besitzt der Stempel 10 einen Kanal 34. Fig. 11 zeigt auch, dass die nach oben gerichtete Oberfläche des Stempels 10 anders ausgebildet sein kann, als dies in Fig. 2 dargestellt ist. Damit wird in größerem Maße auf die Verformung bzw. Durchstülpung der Form 1 mit ihrer Wandung 4 nach oben Einfluss genommen.

Fig. 12 zeigt eine weitere Ausführungsmöglichkeit in schematischer Darstellung, und zwar anhand einer Zwischenstellung, die derjenigen der Fig. 3 vergleichbar ist, jedoch für eine Masse mit anderem Fließverhalten. Als Verdränger 9 wird hier ein aufblasbarer Ballon 35 eingesetzt, der in einem feststehend angeordneten Rohr 36 angedeutet und aufgenommen ist. Seine Ausgangsstellung ist durch gestrichelte Linienführung verdeutlicht. Ein Aufblasen des Ballons 35 führt dazu, dass auch auf diese Art und Weise die Wandung 4 der Form 1 nach oben teilweise durchgestülpt wird, und zwar zentrisch zu der Achse 3.

Fig. 13 zeigt eine Ausformungsmöglichkeit für Schalen 6 oder weiter hergestellte Produkte. Im Gegensatz zu der Darstellung nach Fig. 8, bei der das Produkt nach oben angehoben wird, verdeutlicht Fig. 13 die Form 1 in einer gewendeten Stellung, wie sie an sich bei dem Ausklopfen von gegossenen Schokoladeartikeln bekannt ist. Die Form 1 wird mit der darin befindlichen Schale 6 oder dem Produkt relativ zu einer Rolle 37 bewegt. Auch dabei kommt der Ausformung die elastische Ausbildung der Form 1 zugute. Das Produkt fällt gemäß Pfeil 38 aus der Form 1 heraus. Das Produkt kann direkt auf ein Austrageband oder dgl. abgegeben werden. Es versteht sich, dass anstelle der Rolle 37 auch ein vertikal beweglicher Stößel eingesetzt werden kann.

### BEZUGSZEICHENLISTE

- 1: Form
- 2: Vertiefung
- 3: Achse
- 4: Wandung
- 5: Platte
- 6: Schale
- 7: Masse
- 8: Massespiegel
- 9: Verdränger
- 10: Stempel

- 11: Pfeil
- 12: Rand
- 13: Pfeil
- 14: Boden
- 15: Einrichtung
- 16: Pfeil
- 17: Pfeil
- 18: Pfeil
- 19: zweite Masse
- 20: Pfeil

- 21: Hohlraum
- 22: Deckel
- 23: Pfeil
- 24: Auswerfer
- 25: Pfeil
- 26: Sauger
- 27: Doppelpfeil
- 28: Vertiefung
- 29: Verpackungsspiegel
- 30: Stützring

- 31: Durchbrechung
- 32: Pfeil
- 33: Pfeil
- 34: Kanal
- 35: Ballon
- 36: Rohr
- 37: Rolle
- 38: Pfeil

## Patentansprüche

1. Verfahren zum Herstellen einer Schale aus fett- und/oder zuckerhaltiger Masse in einer zumindest bereichsweise aus elastischem, rückstellfähigem Material bestehenden Form, indem die Form mit der Masse in fließfähigem Zustand teilgefüllt wird, die Masse entlang der Wandung der Form kontaktlos zu der eingebrachten Masse durch einen auf der der Masse abgekehrten Seite der Form angreifenden Verdränger verdrängt, zu der Schale verfestigt wird und schließlich die verfestigte Schale aus der Form ausgebracht wird, **dadurch gekennzeichnet, dass** die Form in ihrem Bereich aus elastischem, rückstellfähigem Material durch den Verdränger in einem aufwärts gerichteten Vorhub so hochgestülpt wird, bis sich der Boden der Form oberhalb des Randes der Form befindet und die Masse in fließfähigem Zustand den vorgesehenen Randbereich der Schale erreicht.

2. Verfahren nach Anspruch 1, **dadurch gekennzeichnet, dass** die kontaktlose Verdrängung der fließfähigen Masse unter Rückstellung der Form in einem nach unten gerichteten Rückhub in Abstimmung auf die sich verfestigenden Bereiche der Schale rückgängig gemacht wird.

3. Verfahren nach Anspruch 2, **dadurch gekennzeichnet, dass** der nach unten gerichtete Rückhub des Verdrängers abgestimmt auf die fortschreitende Verfestigung der Masse zu der Schale gesteuert wird.

4. Verfahren nach einem der Ansprüche 1 bis 3, **dadurch gekennzeichnet, dass** auf der der Masse zugekehrten Seite der Form ein kaltes Gas, insbesondere Kaltluft, eingeblasen wird.

5. Vorrichtung zum Herstellen einer Schale (6) aus fett- und/oder zuckerhaltiger Masse (7) in einer zumindest bereichsweise aus elastischem, rückstellfähigem Material bestehenden Form (1), die zum Einbringen der Masse (7) in fließfähigem Zustand oben offen ausgebildet ist, wobei auf der der Masse (7) abgekehrten Seite der Form (1) kontaktlos zu der eingebrachten Masse ein unterhalb der Form (1) angeordneter und vertikal relativ zu der Form in einem Vorhub und einem Rückhub bewegbarer Verdränger (9) zum temporären elastischen Verformen der Form (1) mit der darin befindlichen fließfähigen Masse (7) vorgesehen ist, **dadurch gekennzeichnet, dass** der aufwärts gerichtete Vorhub des Verdrängers so bemessen ist, bis sich im oberen Totpunkt der Boden der Form oberhalb des Randes der Form befindet und die Masse in fließfähigem Zustand den vorgesehenen Randbereich der Schale erreicht.

6. Vorrichtung nach Anspruch 5, **dadurch gekennzeichnet, dass** der Rückhub des Verdrängers (9) in Abstimmung auf die fortschreitende Verfestigung der Masse steuerbar ist.

7. Vorrichtung nach Anspruch 6, **dadurch gekennzeichnet, dass** der Verdränger (9) als mechanischer Stempel (10) ausgebildet ist, der in dem aufwärts gerichteten Vorhub den elastischen Bereich der Form (1) noch oben durchstülpt und in dem abwärts gerichteten Rückhub die Ausgangsgestalt der elastischen Form (1) durch Rückstellung gezielt zulässt.

8. Vorrichtung nach einem der Ansprüche 5 bis 7, **dadurch gekennzeichnet, dass** ein Antrieb für die Bewegung des Verdrängers (9) vorgesehen ist, der abgestimmt auf die fortschreitende Verfestigung der Masse (7) zu der Schale (6) gesteuert wird.

9. Vorrichtung nach einem der Ansprüche 5 bis 8, **dadurch gekennzeichnet, dass** zwecks Minimierung einer Anhäufung der Masse (7) im Bodenbereich der Schale (6) oberhalb der Form (1) eine Einrichtung (15) zum Einblasen eines kalten Gases während und/oder nach dem Rückstellen der Form (1) in ihre Ausgangsgestalt vorgesehen ist.

10. Vorrichtung nach einem der Ansprüche 5 bis 9, **dadurch gekennzeichnet, dass** zumindest der elastisch verformbare Bereich der Form (1) dünnwandig ausgebildet ist, und dass die Form durch einen ringförmigen Stützkörper (30) auf der der Masse (7) abgekehrten Seite abgestützt ist.

## Claims

1. A method of producing a shell of a mass containing fat and/or sugar in a mould, the mould at least being partly made of an elastic and resilient material, comprising the steps of: filling the fluidized mass into the mould, the mould being partly filled with the mass, dislocating the mass contained in the mould along the wall of the mould without directly contacting the mass by a dislocating element acting on the side of the mould facing away from the mass, solidifying the mass to form a shell, and removing the solidified shell from the mould, **characterized in that** the mould in its region being of elastic and resilient material is deformed by the dislocating element in an upwardly directed forward stroke until the bottom of the mould has reached a position above the rim of the mould and the fluidized mass has reaches the predetermined rim of the shell.

2. The method of claim 1, **characterized in that** the dislocating of the fluidized mass without direct contact is reversed in a downwardly directed backward stroke under resetting of the mould in a manner to be adapted to the solidifying portions of the shell.

3. The method of claim 2, **characterized in that** the downwardly directed backward stroke is controlled with respect to the solidifying process of the mass forming the shell.

4. The method of one of the claims 1 to 3, **characterized in that** cold gas, especially air, is blown onto a side of the mould which faces the mass.

5. An apparatus for producing a shell (6) of a mass (7) containing fat and/or sugar in a mould (1) at least being partly made of an elastic and resilient material, the mould being designed and arranged to be open from above to receive the fluidized mass (7), the apparatus including a dislocating element (9) being designed and arranged below the mould (1) on the side facing away from the mould without directly contacting the mass and to be moved vertically with respect to the mould by a forward stroke and a backward stroke to temporarily deform the mould and the fluidized mass (7) therein in an elastic way, **characterized in that** the upwardly directed forward stroke is designed and limited in an upper dead center in which the bottom of the mould has reached a position above the rim of the mould and the fluidized mass has reaches the predetermined rim of the shell.

6. The apparatus of claim 5, **characterized in that** the backward stroke of the dislocating element (9) is designed and arranged to be controlled with respect to the advancing of the solidifying process of the mass.

7. The apparatus of claim 6, **characterized in that** the dislocating element (9) is designed as a mechanical stamp element (10), the mechanical stamp element being designed and arranged to deform the elastic material of the mould (1) in the upwardly directed forward stroke, and to allow for the elastic mould (1) to reach its initial shape during a downwardly directed backward stroke by controlled removing.

8. The apparatus of one of the claims 5 to 7, **characterized in that** the dislocating element (9) is controlled to be driven in a coordinated way with respect to a continuing solidifying process of the mass (7) forming the shell (6).

9. The apparatus of one of the claims 5 to 8, **characterized in that** a unit (15) is located above the mould (1), the unit being designed and arranged to blow a cold gas onto the mass during and/or after removal of the mould (1) in its initial position to minimize an amount of mass (7) being located in the bottom portion of the shell (6).

10. The apparatus of one of the claims 5 to 9, **characterized in that** the mould (1) includes an elastically deformable portion having a thin wall and **in that** the mould is supported by an annular body (30) on the side facing away from the mass (7).

## Revendications

1. Procédé de fabrication d'une coque à partir d'une pâte contenant de la graisse et/ou du sucre dans un moule constitué au moins par zones d'un matériau élastique, susceptible d'un rappel, le moule étant rempli partiellement avec la pâte à l'état fluide, la pâte est refoulée le long de la paroi du moule, sans contact avec la pâte introduite, par organe déplaceur agissant sur le côté du moule opposé à la pâte, est solidifiée pour donner la coque et enfin la coque solidifiée est extraite du moule, **caractérisé en ce que** le moule est retourné, dans sa zone en un matériau élastique, susceptible d'un rappel, par l'organe déplaceur, dans une course préliminaire dirigée vers le haut, jusqu'à ce que le fond du moule se trouve au-dessus du bord du moule et que la pâte à l'état fluide atteigne la zone de bordure prévue de la coque.

2. Procédé selon la revendication 1, **caractérisé en ce que** le refoulement sans contact de la pâte fluide, par rappel du moule, est rendu réversible dans une course de retour, dirigée vers le bas, en accord avec les zones se solidifiant de la coque.

3. Procédé selon la revendication 2, **caractérisé en ce que** la course de retour, dirigée vers le bas, de l'organe déplaceur, est commandée de manière adaptée à la solidification progressive de la pâte pour former la coque.

4. Procédé selon l'une des revendications 1 à 3, **caractérisé en ce que** sur la face du moule tourné vers la pâte, on insuffle un gaz froid, en particulier de l'air froid.

5. Dispositif de fabrication d'une coque (6) en une pâte (7) contenant de la graisse et/ou du sucre dans un moule (1) constitué au moins en partie d'un matériau élastique, susceptible d'un rappel, lequel moule est ouvert à sa partie supérieure pour l'introduction de la pâte (7) à l'état fluide, sur la face du moule (1), tournée à l'opposé de la pâte (7), étant prévu, sans contact avec la pâte introduite, un organe déplaceur (9) disposé au-dessous du moule (1) et déplaçable verticalement par rapport au moule, dans une course d'avance et une course de retour, pour la déformation élastique temporaire du moule (1) avec la pâte (7) fluide se trouvant à l'intérieur, **caractérisé en ce que** la course d'avance, dirigée vers le haut, de l'organe déplaceur, est telle qu'au point mort supérieur, le fond du moule se trouve au-dessus du bord du moule et la pâte à l'état fluide atteint la zone de bordure prévue de la coque.

6. Dispositif selon la revendication 5, **caractérisé en ce que** la course de retour de l'organe déplaceur (9) peut être commandée en accord avec la solidification progressive de la pâte.

7. Dispositif selon la revendication 6, **caractérisé en ce que** l'organe déplaceur (9) est réalisé sous la forme d'un piston mécanique (10) qui, dans la course d'avance dirigée vers le haut, retourne vers le haut la zone élastique du moule (1) et, dans la course de retour dirigée vers le bas, autorise de manière contrôlée la forme initiale du moule élastique (1), par rappel.

8. Dispositif selon l'une des revendications 5 à 7, **caractérisé en ce qu'**il est prévu un entraînement pour le déplacement de l'organe déplaceur (9) qui est commandé de manière adaptée à la solidification progressive de la pâte (7) pour former la coque (6).

9. Dispositif selon l'une des revendications 5 à 8, **caractérisé en ce que** pour minimiser une accumulation de la pâte (7) dans la zone du fond de la coque (6), il est prévu au-dessus du moule (1), un dispositif (15) pour insuffler un gaz froid pendant et/ou après le rappel du moule (1) dans sa forme initiale.

10. Dispositif selon l'une des revendications 5 à 9, **caractérisé en ce qu'**au moins la zone déformable élastiquement du moule (1) est réalisée à paroi mince, et **en ce que** le moule est soutenu par un corps d'appui (30) de forme annulaire sur la face tournée à l'opposé de la pâte (7).
